# EUROPEAN PATENT SPECIFICATION

(11) **EP 1 710 138 B1**
(45) Date of publication and mention of the grant of the patent: **10.10.2007**
(21) Application number: 06004956.6
(22) Date of filing: 10.03.2006
(51) Int. Cl.: B60R 22/34

(54) **Seatbelt retractor and a seatbelt apparatus having the same**
Sicherheitsgurt-Aufroller und Sicherheitsgurtvorrichtung mit einem derartigen Sicherheitsgurt-Aufroller
Enrouleur de ceinture de sécurité et système de ceinture de sécurité avec un tel enrouleur

(30) Priority: 08.04.2005 JP 2005111539
(43) Date of publication of application: 11.10.2006
(73) Proprietor: TAKATA CORPORATION, Minato-ku, Tokyo 106-8510 (JP)
(72) Inventor: Nomura, Yasuaki, Tokyo 106-8510 (JP)
(74) Representative: Banzer, Hans-Jörg

(56) References cited:
- EP-A- 0 919 441
- DE-A1- 4 426 479
- US-A- 4 749 142
- US-B1- 6 360 981
- PATENT ABSTRACTS OF JAPAN vol. 2002, no. 04, 4 August 2002 (2002-08-04) & JP 2001 347921 A (TAKATA CORP), 18 December 2001 (2001-12-18)

## Description

The present invention relates to the technical field of a seatbelt retractor, attached to a motor vehicle such as an automobile or the like, which is used for a seatbelt apparatus for restraining and protecting an occupant with a seatbelt, and which retracts and withdraws the seatbelt by means of a spool, and, more particularly, relates to a seatbelt retractor having a base frame for rotatably supporting the spool, and a seatbelt apparatus having the seatbelt retractor.

Hitherto, the seatbelt apparatus, attached to a motor vehicle such as an automobile or the like, restrains an occupant with a seatbelt so as to prevent the occupant from moving out of the seat by inertia, thereby protecting the occupant in an emergency such as a vehicle collision where a large deceleration acts on the motor vehicle. The seatbelt apparatus is provided with a seatbelt retractor that performs retracting and withdrawing operations for the seatbelt, and that prevents the seatbelt from being withdrawn in the emergency.

In such a seatbelt retractor, conventionally, a seatbelt retractor that performs the retracting and withdrawing operation for the seatbelt by a motor is provided (see, e.g., PCT Japanese Translation Patent Publication No. 2003-507252). In the seatbelt retractor disclosed in PCT Japanese Translation Patent Publication No. 2003-507252, an electric motor is disposed coaxially and in series with a belt reel (hereinbelow, sometimes referred to as a spool) at one side of the belt reel in an axial direction so that a rotation of the electric motor is transmitted to the belt reel via a speed-reduction mechanism composed of a planetary gear speed-reduction mechanism at a reduced speed. The belt reel is rotated in a belt retracting direction or a belt withdrawing direction by the rotation of the electric motor, whereby the seatbelt can be retracted into or withdrawn from the belt reel.

In the seatbelt retractors such as that disclosed in PCT Japanese Translation Patent Publication No. 2003-507252, operated by a motor drive, because the motor is driven for retracting the seatbelt and for withdrawing the same and the speed-reduction mechanism is operated, vibrations and/or noise tend to occur. In particular, when the spool and the motor are directly connected via the speed-reduction mechanism, because the frequency of the rotation of the spool, the frequency of motor drive, and the frequency of the operation of the speed-reduction mechanism are increased for performing retracting and withdrawing operation for the seatbelt, the vibration and the noise tend to increase.

In general, the seatbelt retractor is disposed in, for example, an internal space of a B-pillar of a motor vehicle body so that the seatbelt retractor is not directly exposed in a room of the motor vehicle. However, problems are considerable that the above-described vibration or the noise is directly transmitted from the seatbelt retractor to the motor vehicle body, and is further transmitted to the occupants.

A seat belt retractor according to the preamble of claim 1 is known from DE 4426479.

Accordingly, the present invention is made in light of the above-described problems, and the object of the present invention is to provide a seatbelt retractor capable of efficiently suppressing the vibration or the noise, caused by the seatbelt retractor, which is transmitted to the motor vehicle body side.

Further, another object of the present invention is to provide a seatbelt apparatus capable of effectively suppressing the vibration or the noise, caused by the seatbelt retractor, which is transmitted to the occupant.

According to the present invention, this object is achieved by a seatbelt retractor according to Claim 1 and a seatbelt apparatus according to Claim 6. The dependent claims define preferred or advantageous embodiments.

A seatbelt retractor according to an aspect of the present invention is characterized in including at least, a seatbelt, a spool for retracting and withdrawing the seatbelt, and a base frame for rotatably supporting the spool, in which the base frame includes a first frame for rotatably supporting the spool, a second frame attached to a motor vehicle body side, and a cushioning device intervening between the first and second frames.

Further, the cushioning device may be formed from a cushioning member.

Furthermore, the first frame may include a pair of a flat-plate-shaped first supporting member and a flat-plate-shaped second supporting member for rotatably supporting the spool, and a spacing member for coupling the first supporting member and the second supporting member to be spaced at a predetermined distance, in which the spacing member is a member for setting the first supporting member and the second supporting member to be in parallel with each other.

At least one of the spacing member and the pair of the first and second supporting members may include an engaging portion, and at least the other of the spacing member and the pair of the first and second supporting members may include an engaged portion to be engaged with the engaging portion.

The seatbelt retractor may further include a motor for generating rotation drive force to rotate the spool, and a speed-reduction mechanism for transmitting the rotation drive force to the spool, in which, the motor and the speed-reduction mechanism are supported by the first frame.

In addition, a seatbelt apparatus according to the invention comprises, at least, a seatbelt for restraining an occupant, a seatbelt retractor for withdrawably retracting the seatbelt, a tongue being slidably supported by the seatbelt, a buckle for the tongue to be detachably engaged therewith, in which the seatbelt retractor is the seatbelt retractor according to any one aspect or embodiment of the present invention.

According to the thus configured seatbelt retractor, because the base frame is divided between the first frame for supporting the spool and the second frame to be attached to the motor vehicle body, and the first and second frames are coupled with each other via a cushioning devices, vibration and noise that are caused by the rotation of the spool can be effectively cut off and suppressed so as to be not transmitted to the motor vehicle body side.

In particular, if the seatbelt retractor has a cushioning member, because the cushioning device is formed from a cushioning member, such as rubber or the like, a structure of the seatbelt retractor is simplified.

In addition, if the pair of supporting members and the spacing member are provided, because the first frame is formed by coupling a pair of a flat-plate-shaped first and second supporting members by a spacing member, and the first and second supporting members are set in parallel with each other by the spacing member, the degree of the parallelization of the first and second supporting members can be obtained with high accuracy. As a result, an assembling accuracy of the spool can be improved. Therefore, the vibration and the noise caused by the rotation of the spool can be further suppressed.

Further, if the engaging and engaged portions are provided, because the first and second supporting members are coupled in a state in which either one of an engaging portion and an engaged portion formed at the spacing member is engaged with either one of the other engaging portion and the other engaged portion formed at the pair of the first and second supporting members, the first and second supporting members can be firmly coupled with each other and a mutual displacement of the first and second supporting members caused by a load exerted to the spool can be securely prevented.

Still further, because the degree of the parallelization of the above-described first and second supporting members can be obtained with high accuracy, and/or because the mutual displacement of the first and second supporting members can be prevented, the spool can be supported by the first and second supporting members with high accuracy. Accordingly, the vibration and the noise caused by the rotation of the spool can be effectively suppressed.

In addition, if a motor is provided, transmission of the vibration and the noise caused by the rotation drive of the motor and the operation of the speed-reduction mechanism, to the motor vehicle body side can be suppressed. In particular, when the spool is directly connected to the motor via the speed-reduction mechanism, frequency of drive of the motor and frequency of operation of the speed-reduction mechanism are relatively high. However, the transmission of the vibration and the noise to the motor vehicle side can be efficiently suppressed by adopting the seatbelt retractor of the present invention, described above.

Further, because the degree of the parallelization of the first and second supporting members can be obtained by the spacing member with high accuracy, an assembling accuracy of the spool, the motor, and the speed-reduction mechanism can be improved. As a result, the vibration and the noise caused by the rotation of the spool, the drive of the motor, and the operation of the speed-reduction mechanism can be further suppressed. In addition, the rotation drive force of the motor can be efficiently transmitted to the spool with little loss. Thus, the transmission efficiency can be improved, resulting in improvement of a durability of the speed-reduction mechanism.

Furthermore, according to the seatbelt apparatus of the present invention, because the seatbelt apparatus is provided with the seatbelt retractor of the present invention, the vibration and the noise caused by the seatbelt retractor is reduced to the motor vehicle body side. Therefore, the occupant can be prevented from feeling uncomfortableness caused by the vibration and the noise.

Still further, because the first and second frames are coupled via a cushion device, impact energy applied to the occupant from a seatbelt by inertia movement of the occupant can be absorbed when a large deceleration acts on the motor vehicle in a case of a vehicle collision or the like, and an energy absorbing effect (EA effect) can be obtained by the cushion device.

Hereinbelow, a best mode for embodying the present invention will be explained referring to the accompanying drawings.

FIG. 1 is a drawing schematically illustrating an example of a seatbelt apparatus having a seatbelt retractor according to an exemplary embodiment of the present invention.

FIG. 2 is a cross-sectional view schematically and partially illustrating the seatbelt retractor used in the seatbelt apparatus shown in FIG. 1.

FIG. 3 is an exploded perspective view schematically illustrating a partially exploded base frame of the seatbelt retractor shown in FIG. 2.

FIG. 4 is an exploded perspective view schematically illustrating the base frame of the seatbelt retractor, shown in FIG. 2, another part of which is exploded.

FIG. 5 is an assembled perspective view schematically illustrating the base frame.

FIG. 6 is a cross-sectional view along a line VI-VI in FIG. 2.

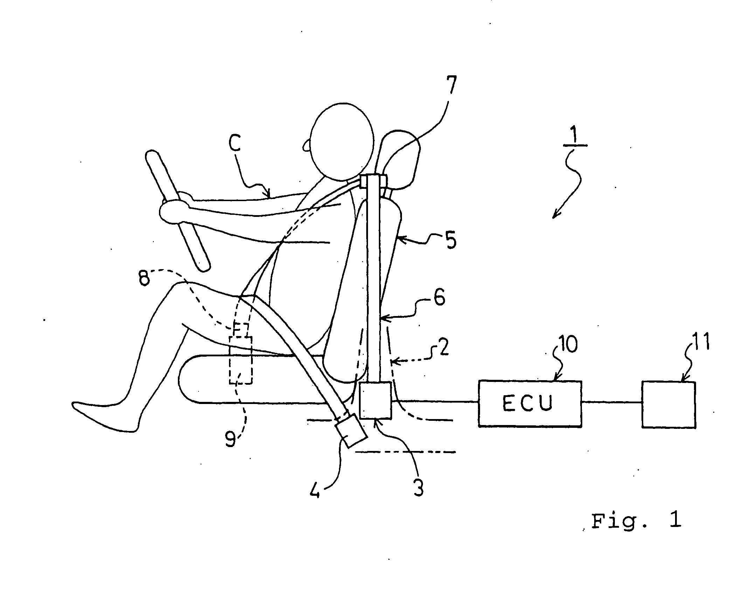

FIG. 1 is a drawing schematically illustrating an example of a seatbelt apparatus having a seatbelt retractor of an embodiment of the present invention. Further, in the explanation below, the terms "above", "below", "left" and "right" are used with reference to the directions in the drawings used for each of the explanations.

As illustrated in FIG. 1, the seatbelt apparatus 1 of the present embodiment comprises the seatbelt retractor 3, which is fixed to a B-pillar 2 and etc., of a motor vehicle body and driven by a motor, a seatbelt 6 which is withdrawn from the seatbelt retractor 3 and provided, at its end, with a belt anchor 4 which is fixed to a floor of the motor vehicle body or a motor vehicle seat 5, a guide anchor 7 which is attached to a center pillar and etc., of the motor vehicle body and guides the seatbelt 6 withdrawn from the seatbelt retractor 3 to a shoulder of an occupant C, a tongue 8 which is slidably supported by the seatbelt 6 guided from the guide anchor 7, a buckle 9 with which the tongue 8 is inserted and detachably engaged and which is fixed to the floor of the motor vehicle body or the motor vehicle seat 5, an electronic control unit (ECU) 10 which performs control operation for the motor of the seatbelt retractor 3, and an input device 11 such as, for example, a collision detection device, an object detection device, or the like, which transmits various input signals into the ECU 10 for the ECU 10 to control the electric motor.

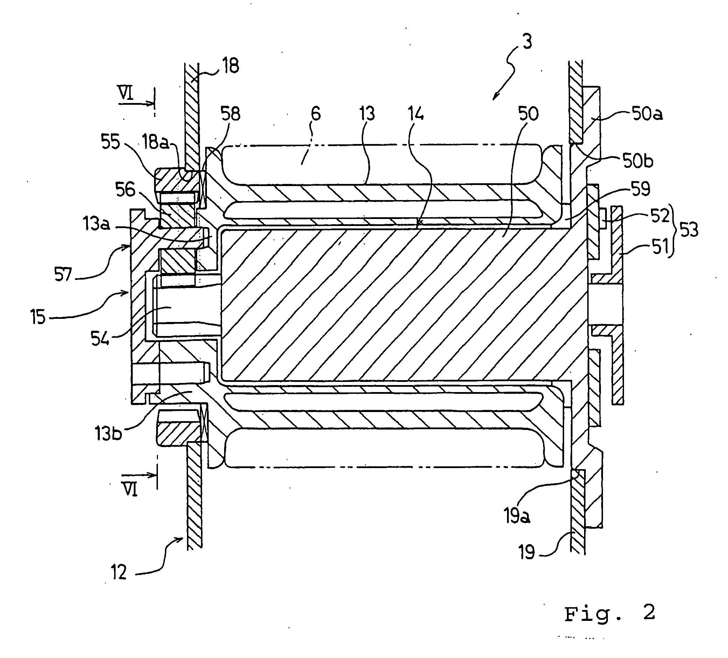

FIG. 2 is a cross-sectional view schematically and partially illustrating the seatbelt retractor of this embodiment.

As illustrated in FIG. 2, the seatbelt retractor 3 has a base frame 12, a spool 13 for retracting the seatbelt 6, the electric motor 14 for rotating the spool 13, and a speed-reduction mechanism 15 for transmitting rotation drive force of the electric motor 14 to the spool 13 at a reduced speed.

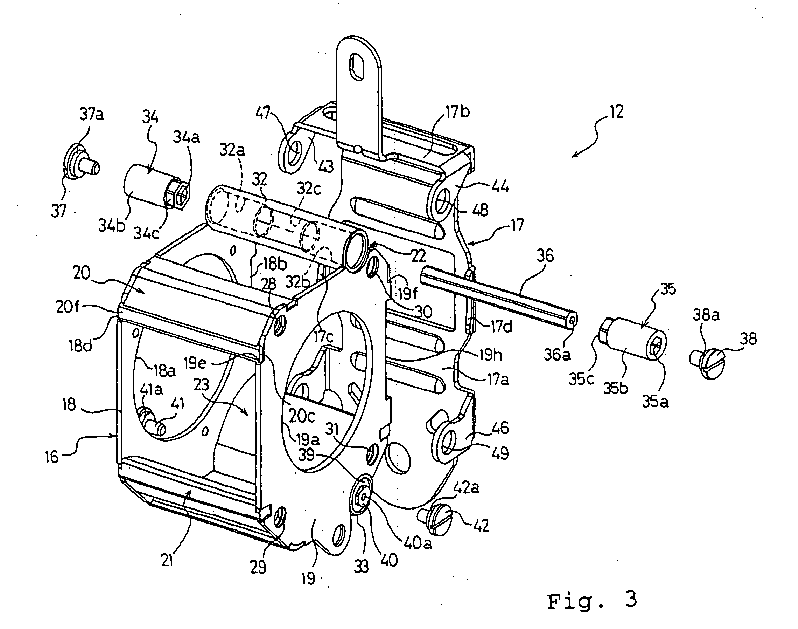

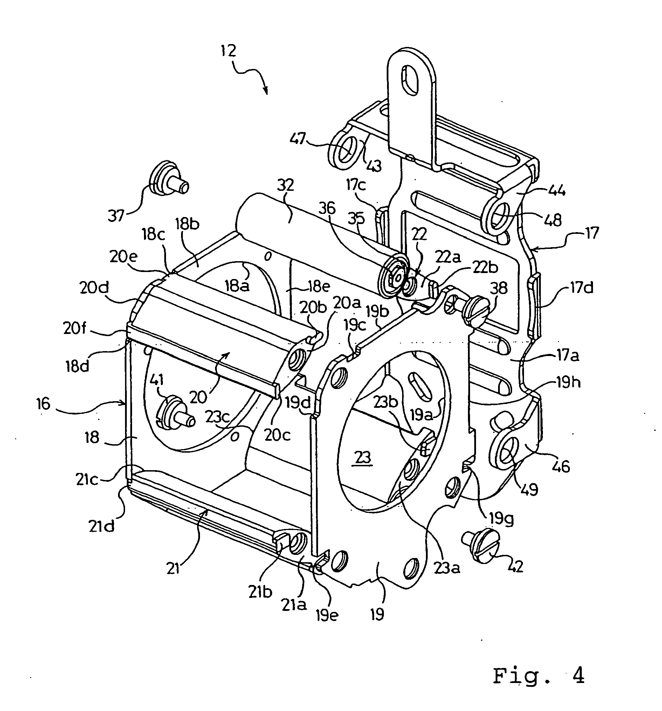

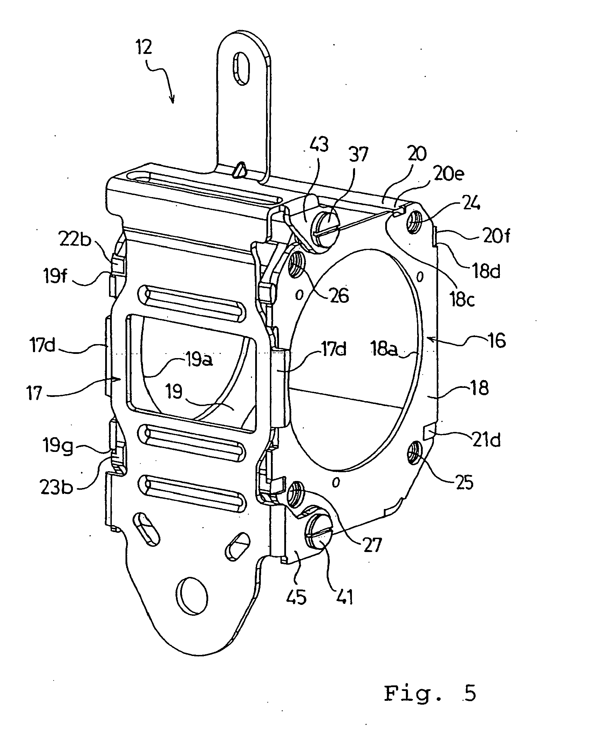

FIG. 3 is an exploded perspective view schematically illustrating a partially exploded base frame. FIG. 4 is an exploded perspective view schematically illustrating the base frame, another part of which is exploded. FIG. 5 is an assembled perspective view schematically illustrating the base frame.

As illustrated in FIG. 3, the base frame 12 is formed of a first frame 16 for rotatably supporting the spool 13 and a second frame 17 attached to the motor vehicle body. The first frame 16 is composed of a left-and-right pair of rectangular flat-plate-shaped first and second supporting members 18 and 19, and four spacing members 20, 21, 22, and 23 for coupling the first and second supporting members 18 and 19 at a predetermined distance. In the first and second supporting members 18 and 19, relatively large circular openings 18a and 19a, respectively, are formed.

As illustrated in FIG. 4, a right end face 20a of the spacing member 20 is in a proximal face-to-face contact with an inside face 19b of the second supporting member 19. In addition, at a right end of the spacing member 20, a pair of engagement projections 20b and 20c are formed. The one engagement projection 20b is engaged with an engagement concave portion 19c of the second supporting member 19, and the other engagement projection 20c is engaged with an engagement step portion 19d of the second supporting member 19. Further, a left end face 20d of the spacing member 20 is in a proximal face-to-face contact with an inside face 18b of the first supporting member 18. In addition, at a left end of the spacing member 20, a pair of engagement projections 20e and 20f, which is identical to the pair of the engagement projections 20b and 20c are formed. The one engagement projection 20e is engaged with an engagement concave portion 18c of the first supporting member 18, and the other engagement projection 20f is engaged with an engagement step portion 18d of the first supporting member 18. In addition, a degree of parallelization of the right and left end faces 20a and 20d of the spacing member 20 is specified with high accuracy.

Similarly, the right end face 21a of the spacing member 21 is configured to be in the proximal face-to-face contact with the inside face 19b of the second supporting member 19. Further, at a right end of the spacing member 21, an engagement projection 21b is formed. The engagement projection 21b is engaged with the engagement concave portion 19e of the second supporting portion 19. Furthermore, the left end face 21c of the spacing member 21 is in the proximal face-to-face contact with the inside face 18b of the first supporting member 18. In addition, at a left end of the spacing member 21, an engagement projection 21d, which is quite identical to the engagement projection 21b, is formed. The engagement projection 21d is engaged with an engagement concave portion of the first supporting member 18 (formed of a quite similar or the same shape as that of the engagement concave portion 19e). Further, the degree of parallelization of the right and left end faces 21a and 21c of the spacing member 21 is specified with high accuracy.

In the same manner as described above, a right end face 22a of the spacing member 22 is in a proximal face-to-face contact with the inside face 19b of the second supporting member 19. Further, at a right end of the spacing member 22, an engagement projection 22b is formed. The engagement projection 22b is engaged with an engagement step portion 19f (shown in FIG. 3) of the second supporting member 19, which is formed in a manner similar to the engagement step portion 19d. Furthermore, a left end face of the spacing member 22 is in a proximal face-to-face contact with the inside face 18b of the first supporting member 18. In addition, at a left end of the spacing member 22 (although not shown) an engagement projection, which is formed similarly to the engagement projection 22b, is formed. The engagement projection is engaged with the engagement step portion (formed in a manner similar to that of the engagement step portion 18d) of the first supporting member 18. Further, the degree of parallelization of the right end face 22a and the left end face of the spacing member 22 is specified with high accuracy.

In the same manner as described above, a right end face 23a of the spacing member 23 is in a proximal face-to-face contact with the inside face 19b of the second supporting member 19. Further, at a right end of the spacing member 23, an engagement projection 23b is formed. The engagement projection 23b is engaged with an engagement concave portion 19g of the second supporting member 19, which is formed in the same manner as that of the engagement concave portion 19e. Further, the left end face 23c of the spacing member 23 is in a proximal face-to-face contact with the inside face 18b of the first supporting member 18. Furthermore, at a left end (although not shown) of the spacing member 23, an engagement projection formed in the same manner as that of the engagement projection 23b is formed. The engagement projection is engaged with an engagement concave portion (formed in the same manner as that of the engagement concave portion with which the engagement projection 21d of the spacing member 21 is engaged) of the first supporting member 18. In addition, the degree of the parallelization of both the right end face 23a and the left end face 23c of the spacing member 23 is specified with high accuracy.

Further, each of the dimensions of the length between the left end face and the right end face of each of the spacing members 20, 21, 22, and 23 is also specified to be equal to each other with high accuracy.

The four spacing members 20, 21, 22, and 23 are connected to the first and second supporting members 18 and 19 by penetrating fixing members, such as bolts (not shown) or the like, through attaching holes 24, 25, 26, and 27, and 28, 29, 30, and 31, which are respectively formed in the first and second supporting members 18 and 19, and screwing the first and second supporting members 18 and 19 to the four spacing members 20, 21, 22, and 23, in a state in which both the left and right end faces of each of the four spacing members 20, 21, 22, and 23 are in a proximal face-to-face contact with each of inside faces (facing each other) 18b and 19b of the first and second supporting members 18 and 19. The engagement projections provided in the four spacing members 20, 21, 22, and 23 constitute either one of "one engaging portion" or "one engaged portion" of the present invention, and the engagement concave portions and the engagement step portions provided in the first and second supporting members 18 and 19 constitute either one of "the other engaging portion" or "the other engaged portion" of the present invention.

Accordingly, the four spacing members 20, 21, 22, and 23 are respectively disposed at each of four corner portions of the first and second supporting members 18 and 19, and position the first supporting member 18 and the second supporting member 19 at a predetermined distance therebetween. Further, the degree of the parallelization of both the right and left end faces of each of the spacing members 20, 21, 22, and 23 is specified with high accuracy, and each of the dimensions of length between the left end face and the right end face of each of the spacing members 20, 21, 22, and 23 is also specified to be equal with high accuracy. Therefore, each of the spacing members 20, 21, 22, and 23 specifies the degree of the parallelization of the coupled first and second supporting members 18 and 19 with high accuracy. In addition, the engagement projections, formed at both the left and right ends of each of the spacing members 20, 21, 22, and 23, respectively, are engaged with each of the aforementioned engagement concave portions and the engagement step portions, respectively formed in the first and second supporting members 18 and 19. Therefore, each of the spacing members 20, 21, 22, and 23 prevents the coupled first and second supporting members 18 and 19 from being displaced from each other by a load applied to the spool 13. Further, in such a state in which the first and second supporting members 18 and 19 are coupled by means of each of the spacing members 20, 21, 22, and 23, openings 18a and 19a of the first and second supporting members 18 and 19 are disposed in an axial direction keeping high concentricity.

Furthermore, in the upper and lower spacing members 22 and 23, each of the coupling portions 32 and 33 of the first frame 16 side is integrally formed, as shown in FIG. 3. Both of the coupling portions 32 and 33 of the first frame 16 side are extended to approximately outer faces of the first and second supporting members 18 and 19. A coupling portion 32 of the first frame 16 side located at an upper side is formed into a cylindrical shape, and inner peripheral faces of both end portions of the coupling portion 32 of the first frame 16 side are formed into circular portions 32a and 32b (whose lengths in an axial direction and inner diameters are the same to each other) having a circular traverse cross-section. In addition, an inner peripheral face of a center portion of the coupling portion 32 of the first frame 16 side is communicated with the circular portions 32a and 32b, and is formed into a polygonal portion 32c, whose traverse cross-section is polygonal (regular hexagonal as shown in the drawing). Further, though not specifically shown in the drawing, a coupling portion 33 of the first frame 16 side located at a lower side is also formed into the same shape as that of the coupling portion 32 of the first frame 16 side located at the upper side.

Further, a pair of cylindrical cushioning members 34 and 35 composed of rubber and the like and having penetration holes 34a and 35a in an axial direction whose traverse cross-section is polygonal (regular hexagonal, shown in the drawing) are provided in a manner so as to be closely fit into both end portions of the coupling portion 32 of the first frame 16 side. The cushioning members 34 and 35 are respectively formed of circular portions 34b and 35b that closely fit into the circular portions 32a and 32b, and polygonal portions 34c and 35c that are closely fit into the polygonal portion 32c and are formed into the same polygon as that of the polygonal portion 32c.

Furthermore, the pair of the cushioning members 34 and 35 is disposed to be symmetric with each other, and the respective polygonal portions 34c and 35c are closely fit into the corresponding polygonal portion 32c of the coupling portion 32 of the first frame 16 side. In addition, the circular portions 34b and 35b of the respective cushioning members 34 and 35 are closely fit into the corresponding circular portions 32a and 32b of the coupling portion 32 of the first frame 16 side to be attached to the coupling portion 32 of the first frame 16 side. Further, a reinforcement member 36, whose traverse cross-section has the same polygonal shape as that of the penetration holes 34a and 35a, is provided in the cushioning members 34, 35 which are thus attached to the coupling portion 32 of the first frame 16 side, being inserted through the penetration holes 34a and 35a in a manner so as not to be able to rotate relative to the cushioning members 34, 35. The reinforcement member 36 obtains the predetermined strength by integrally coupling the pair of the cushioning members 34 and 35 to each other that are separately disposed. Female screws (only a female screw at the right end side is shown in FIG. 3) are formed at both end portions of the reinforcement member 36, and fixing members 37 and 38 such as screws are screwed in corresponding female screws.

Similarly, although not shown in the drawing in detail, in the same manner as in the aforementioned coupling portion 32 of the first frame 16 side, a pair of cylindrical cushioning members (only a cushioning member 39 at the right side is shown in FIG. 3), a reinforcement member 40 having female screws at both end portions thereof (only a female screw 40a at the right side is shown in FIG. 3), and the fixing members 41 and 42 such as a pair of screws are provided in the coupling portion 33 of the first frame 16 side at the lower side.

Further, in a state that each of the cushioning members (34, 35, 39, and the like) is attached to the corresponding upper and lower coupling portions 32 and 33 of the first frame 16 side, step portions on the boundaries between the circular portions (34b, 35b and the like) and the polygonal portions (34c, 35c, and etc.) are in close contact with the step portions on the corresponding boundaries between the circular portions (32a, 32b, and etc.) and the polygonal portions (32c and etc.). In addition, each of end faces of the circular portions (34b, 35b, and etc.) at opposite sides of the polygonal portions (34c, 35c, and etc.) shares approximately a same face with each of end faces of the coupling portion 32 and 33 of the first frame 16 side. (FIG. 3 illustrates that only the end face of the coupling portion 33 of the first frame 16 side at the lower side shares a same face with the end face of the cushioning member 39.) Further, in a state in which each of the reinforcement members 36 and 40 is attached to the corresponding upper and lower coupling portions 32 and 33 of the first frame 16 side, each of the end faces of the reinforcement members 36 and 40 is configured to protrude at a predetermined amount from the end faces of the corresponding cushioning members (34, 35, 39, and etc.). (FIG. 3 illustrates that only the right end face of the reinforcement member 40 protrudes from the right end face of the cushioning member 39.)

On the other hand, the second frame 17 is formed into a flat plate shape, i.e., a flat board is formed into a predetermined shape by press molding process. The second frame 17 is hung across side ends of the coupling portions 32 and 33 of the first frame 16 side of the first and second supporting members 18 and 19. A pair of the left and right coupling portions 43 and 44 of the second frame 17 at an upper side, and a pair of the left and right coupling portions 45 and 46 (the coupling portion 45 of the second frame 17 is shown in FIG. 5) of the second frame 17 at a lower side are provided in the second frame 17. An upper end portion of a main body 17a of the second frame 17 is bent at a right or approximately right angle to form an upper main body 17b. Both the left and right end portions of the upper main body 17b are bent at a right or approximately right angle to form an arm-like shape. Thus, the pair of the coupling portions 43 and 44 of the second frame 17 at the upper side are formed. Further, the pair of the coupling portions 45 and 46 of the second frame 17 at the lower side is formed by bending a lower part of the main body 17a of the second frame 17 at a right or approximately right angle to form an arm-like shape. Circular penetration holes 47, 48, and 49 (in FIG. 3, the penetration hole of the coupling portion 45 of the second frame 17 is not shown) are formed in the coupling portions 43, 44, 45, and 46 of the second frame 17. In the penetration holes 47, 48, and 49, a supporting portions 37a, 38a, and 42a of the fixing members 37, 38, and 42 being corresponding thereto are supported in a fitting manner (the supporting shaft 41a of the fixing member 41 is supported by a penetrating hole (not shown) of the coupling portion 45 of the second frame 17 in a fitting manner).

Next, an assembling process for the thus configured first and second frames 16 and 17 will be explained. Firstly, the coupling portions 43 and 44 of the second frame 17 at the upper side are disposed in a manner so as to sandwich the two ends of the reinforcement member 36 of the first frame 16, and the coupling portions 45 and 46 of the second frame 17 at the lower side are disposed in a manner so as to sandwich the two ends of the reinforcement member 40 of the first frame 16. Then, engaging projections 17c and 17d formed at both the left and right side ends of the main body 17a of the second frame 17 are respectively engaged with engagement concave portions 18e and 19h formed at the first and second supporting members 18 and 19 of the first frame 16.

Then, each of the fixing members 37, 38, 41, and 42 is penetrated through each of the penetrating holes of the reinforcement members 36 and 40, and is screwed to each of the female screws of the reinforcement members 36 and 40. As a result, the coupling portions 43, 44, 45, and 46 of the second frame 17 are supported by the corresponding supporting portions 37a, 38a, 41a and 42a of the fixing members 37, 38, 41, and 42, respectively. Thus, the coupling portions 43, 44, 45, and 46 of the second frame 17 are held between head portions of each of the fixing members 37, 38, 41, and 42 and both ends of each of the reinforcement members 36 and 40 in a sandwiched manner. As described above, the second frame 17 is integrally combined with the first frame 16 via the coupling portions 43, 44, 45, and 46 of the second frame 17, the reinforcement members 36 and 40, the cushioning members (34, 35, 39, and the like), the coupling portions 32 and 33 of the first frame 16 side, and the spacing members 22 and 23, and thus, the base frame 12 is brought to completion as shown in FIG. 5.

As shown in FIG. 2, the spool 13 is formed into a cylindrical bag-shape being opened at a right end and having a bottom portion 13a at a left end. In the bottom portion 13a, a cylindrical rotation shaft 13b protrudes toward the left and the rotation shaft 13b penetrates an opening 18a of the first supporting member 18.

The electric motor 14 is configured to be a heretofore known brush-less motor of an inner-rotor-type. The electric motor 14 comprises a cylindrical stator (although not shown in the drawing) fixed to a portion in a motor housing 50 and composed of a coil, and a rotor that is composed of a magnet which axially extends through and is rotated by the stator. A magnetic disc 51 is provided at a right side of the rotor, and is configured to be integrally rotatable with the rotor. In addition, a hole sensor 52 is provided in the motor housing 50. Further, a rotation amount detection sensor 53 for detecting the rotation amount of the electric motor 14 is formed of the magnetic disc 51 and the hole sensor 52. The rotation amount detection sensor 53 is one of inputting devices 11, and a rotation amount detection signal of the electric motor 14 detected by the rotation amount detection sensor 53 is input to the ECU 10.

An attaching flange 50a is formed at a right end of the motor housing 50. The electric motor 14 is inserted into the spool 13 from the right side in an axial direction, and a annular step portion 50b formed at the attaching flange 50a is fit into and supported by the opening 19a of the first supporting member 19. In addition, the attaching flange 50a is fixed to the second supporting member 19 by the fixing members (not shown).

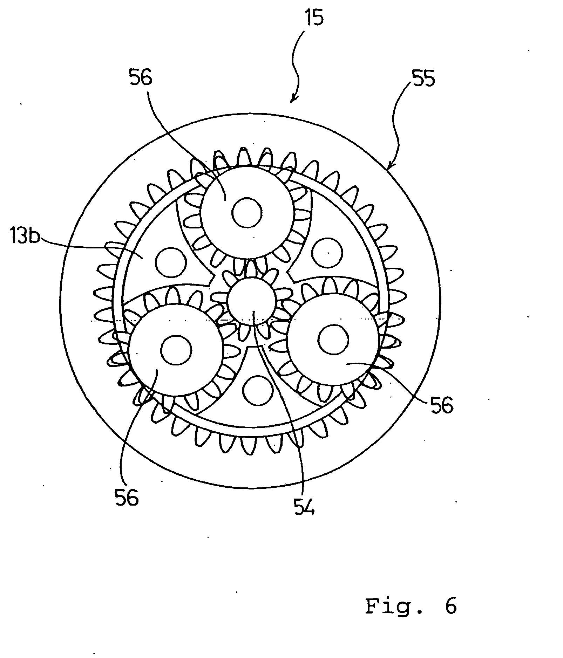

As illustrated in FIGs. 2 and 6, the speed-reduction mechanism 15 is configured to be a planetary gear speed-reduction mechanism. The planetary gear speed-reduction mechanism is disposed at the left end of the rotor of the electric motor 14. The planetary gear speed-reduction mechanism is formed of a sun gear 54 that integrally rotates with the rotor, an internal gear 55 that is fit into and fixed to the opening 18a of the first supporting member 18, a predetermined number (three in an example shown in FIG. 6) of planetary gears 56 that mesh with both the sun gear 54 and the internal gear 55, and a carrier gear 57 that rotatably supports the planetary gears 56. The carrier gear 57 is attached to the spool 13 and is configured to integrally rotate with the spool 13, and the left end side of the spool 13 is supported by the sun gear 54 via the carrier gear 57 and the planetary gears 56 in a radial direction. Further, the spool 13 is rotatably supported by the internal gear 55 at the left end side via a thrust bearing 58 in an axial direction (thrust direction), and the right end side of which is supported by the motor housing 50 via a bearing 59 so as to rotate in both radial and axial directions.

In the thus configured speed-reduction mechanism 15, the rotation of the rotor of the electric motor 14 is transmitted to the planetary gears 56 via the sun gear 54, and the planetary gears 56 rotate. Then, the planetary gears 56 move around the sun gear 54 by its rotation. Thus, the spool 13 is rotated via the carrier gear 57 at a reduced speed. In this case, the ECU 10 performs control operation for the electric motor 14 to rotate on the basis of a rotation amount detection signal from the rotation amount detection sensor 53.

Thus, in the seatbelt retractor 3 of the present embodiment, the spool 13 and the electric motor 14 are directly connected via the speed-reduction mechanism 15, and the seatbelt retractor 3 is configured such that the spool 13 is only rotated by the rotation of the electric motor 14. In this case, the spool 13 is rotated in either a belt retracting direction or a belt withdrawing direction, depending on a rotating direction of the electric motor 14, i.e., a direction of a normal rotation or that of a reversed rotation, which is controlled by the ECU 10. Further, the ECU 10 performs control operation for the rotation of the electric motor 14 for retracting the seatbelt 6 to keep the occupant C under restraint or to store the seatbelt 6, or the ECU 10 performs control operation for the rotation of the electric motor 14 for withdrawing the seatbelt 6 to assist the occupant C to withdraw the seatbelt 6 when wearing the seatbelt 6, on the basis of a resultant input signal from the input device 11 that performs various sensing operation.

According to the seatbelt retractor 3 of the present embodiment, because the base frame 12 is divided between the first frame 16 for supporting the spool 13 and the second frame 17 to be attached to the motor vehicle body, and because the first and second frames 16 and 17 are coupled with each other via the cushioning members (34, 35, 39, and the like), a vibration and a noise caused by the rotation of the spool 13, the rotation drive of the electric motor 14, and the operation of the speed-reduction mechanism 15 can be suppressed so as to be not transmitted to the motor vehicle body side. In particular, in a case in which the spool 13 and the electric motor 14 are directly connected via the speed-reduction mechanism as in the seatbelt retractor 3 of the present embodiment, the frequency of the rotation of the spool 13, the frequency of the drive of the electric motor 14, and the frequency of the operation of the speed-reduction mechanism 15 are high for retracting and withdrawing the seatbelt 6. Therefore, the vibration and the noise to be transmitted to the motor vehicle body side can be more efficiently suppressed. In addition, because the cushioning member, such as rubber or the like, is used for the cushioning device, a structure of the seatbelt retractor 3 is simplified.

Further, in the first frame 16 of the base frame 12, because the pair of the flat-plate-shaped first and second supporting members 18 and 19 are coupled in a manner so as to be spaced at a predetermined distance by the spacing members 20, 21, 22, and 23 with high accuracy, the degree of the parallelization of the first and second supporting members 18 and 19 can be obtained with high accuracy. As a result, an assembling accuracy of the spool 13, the electric motor 14, each of the gears 54, 55, and 56 in the planetary gear speed-reduction mechanism, and the carrier 57 can be improved. Therefore, the vibration and the noise caused by the rotation of the spool 13, the drive of the electric motor 14, and the operation of the speed-reduction mechanism 15 can be further suppressed and rotation drive force of the electric motor 14 can be efficiently transmitted to the spool 13 with little transmission loss, resulting in improved transmission efficiency.

Furthermore, each of the engagement projections formed at both the left and right end of each of the spacing members 20, 21, 22, and 23 are engaged with the engagement concave portions and the engagement step portions provided at the pair of the first and second supporting members 18 and 19, and thus the first and second supporting members 18 and 19 are coupled with each other by each of the spacing members 20, 21, 22, and 23. Accordingly, the first and second supporting members 18 and 19 can be firmly coupled with each other and the first frame 16 can be provided with high rigidity and firmness. As a result, mutual displacement of the first and second supporting members 18 and 19 caused by a load applied to the spool 13 can be securely prevented.

Still further, as described above, because the degree of the parallelization of the first and second supporting members 18 and 19 can be obtained with high accuracy, and/or because the mutual displacement between the first and second supporting members 18 and 19 can be prevented, concentricity of the openings 18a and 19a of the first and second supporting members 18 and 19 can be set with high accuracy. As a result, the concentricity of the spool 13, the electric motor 14, each of the gears 54 and 55 of the speed-reduction mechanism 15, and the carrier gear 57 can also be set with high accuracy. Accordingly, the vibration and the noise caused by the rotation of the spool 13, the rotation drive of the electric motor 14, and the operation of the speed-reduction mechanism 15 can be further efficiently suppressed. In addition, durability of each of the gears 54, 55, and 56 of the speed-reduction mechanism 15 can be improved.

Further, according to the seatbelt apparatus 1 of the present embodiment, because the above-described seatbelt retractor 3 is provided in the seatbelt apparatus 1, the transmission of the vibration and the noise that occurs in the seatbelt retractor 3 is reduced or cut off, and the occupant C can be prevented from feeling uncomfortableness caused by such a vibration and a noise.

Furthermore, because the first and second frames 16 and 17 are coupled via the cushioning members (34, 35, 40, and the like), the impact energy applied to the occupants C from the seatbelt 6 by an inertia movement of the occupant C in an emergency such as a vehicle collision where a large deceleration acts on the motor vehicle can be absorbed by the cushioning members, and an EA effect (Energy Absorbing effect) can be obtained by the cushioning members (34, 35, 39, and the like).

In addition, in the above-described embodiment, although the electric motor 14 is to be embedded in the spool 13, the electric motor 14 can be provided outside of the spool 13 along the axial direction of the spool 13, as is described in PCT Japanese Translation Patent Publication No. 2003-507252, and the electric motor 14 can be provided outside the spool 13 in parallel with the spool 13.

It is natural to mention that the seatbelt retractor of the present invention is applicable to the heretofore known conventional seatbelt retractor 3 having no electric motor 14.

The seatbelt retractor and the seatbelt apparatus having the seatbelt retractor of the present invention can be used for the seatbelt apparatus for protecting the occupants by keeping them under restraint by the seatbelt, and can be preferably utilized for the seatbelt retractor provided with a base frame that rotatably supports the spool for performing a retracting operation or a withdrawing operation for the seatbelt, and the seatbelt apparatus having the same.

## Claims

1. A seatbelt retractor, comprising at least:
a seatbelt (6);
a spool (13) for retracting and withdrawing the seatbelt; and
a base frame (12) for rotatably supporting the spool,
wherein, the base frame (12) comprises: a first frame (16) for rotatably supporting the spool (13); a second frame (17) attached to a motor vehicle body side; **characterized in that** the base frame (12) further comprises a cushioning device (34, 35, 39) intervening between the first and second frames (16, 17).

2. The seatbelt retractor according to Claim 1, wherein, the cushioning device is formed from a cushioning member (34, 35, 39).

3. The seatbelt retractor according to either one of Claims 1 or 2, wherein, the first frame (16) comprises: a pair of flat-plate-shaped first and second supporting members (18, 19), for rotatably supporting the spool (13); and a spacing member (20-23) for coupling the first and second supporting members (18, 19) to be spaced at a predetermined distance, wherein the spacing member (20-23) is a member for setting the first and second supporting members (18, 19) to be in parallel with each other.

4. The seatbelt retractor according to Claim 3, wherein, at least one of the spacing member (20-23) and the pair of the first and second supporting members (18, 19) comprises an engaging portion (20b, 20c, 20e, 20f, 21b, 21d, 22b, 23b), and at least the other of the spacing member and the pair of the first and second supporting members comprises an engaged portion (19c-19g, 18c, 18d) to be engaged with the engaging portion.

5. The seatbelt retractor according to any one of Claims 1 through 4, comprising:
a motor (14) for generating rotation drive force to rotate the spool (13); and
a speed-reduction mechanism (15) for transmitting the rotation drive force to the spool, wherein,
the motor (14) and the speed-reduction mechanism (15) are supported by the first frame (16).

6. A seatbelt apparatus, comprising at least:
a seatbelt (6) for restraining an occupant;
a seatbelt retractor (3) for withdrawably retracting the seatbelt,
a tongue (8) being slidably supported by the seatbelt;
a buckle (9) for the tongue (8) to be detachably engaged therewith,
wherein the seatbelt retractor is the seatbelt retractor according to any one of Claims 1 through 5.

## Patentansprüche

1. Sitzgurtaufroller, welcher wenigstens umfasst:
einen Sitzgurt (6);
eine Spule (13) zum Einziehen und Herausziehen des Sitzgurts; und
einen Basisrahmen (12) zum drehbaren Lagern der Spule,
wobei der Basisrahmen (12) umfasst:
einen ersten Rahmen (16) zum drehbaren Lagern der Spule (13) ; einen zweiten Rahmen (17), welcher an einer Kraftfahrzeugkörperseite angebracht wird;
**dadurch gekennzeichnet,**
**dass** der Basisrahmen (12) weiterhin eine Dämpfungseinrichtung (34, 35, 39) umfasst, welche zwischen den ersten und zweiten Rahmen (16, 17) vorgesehen ist.

2. Sitzgurtaufroller nach Anspruch 1, wobei die Dämpfungseinrichtung aus einem Dämpfungsteil (34, 35, 39) ausgebildet ist.

3. Sitzgurtaufroller nach einem der Ansprüche 1 oder 2, wobei der erste Rahmen (16) umfasst: ein Paar von ebenen plattenförmigen ersten und zweiten Stützteilen (18, 19) zum drehbaren Lagern der Spule (13); und ein Abstandshalterteil (20-23) zum Aneinanderkoppeln der ersten und zweiten Stützteile (18, 19), so dass sie mit einem vorherbestimmten Abstand beabstandet sind, wobei das Abstandshalterteil (20-23) ein Teil ist, um die ersten und zweiten Stützteile (18, 19) so einzurichten, dass sie parallel zueinander sind.

4. Sitzgurtaufroller nach Anspruch 3, wobei wenigstens eines von dem Abstandshalterteil (20-23) und dem Paar der ersten und zweiten Stützteile (18, 19) einen eingreifenden Abschnitt (20b, 20c, 20e, 20f, 21b, 21d, 22b, 23b) umfasst, und wobei wenigstens das andere von dem Abstandshalterteil und dem Paar der ersten und zweiten Stützteile einen mit dem eingreifenden Abschnitt in Eingriff zu bringenden Eingreifabschnitt (19c-19g, 18c, 18d) umfasst.

5. Sitzgurtaufroller nach einem der Ansprüche 1-4, umfassend:
einen Motor (14) zum Erzeugen einer Drehantriebskraft zum Drehen der Spule (13); und
einen Drehzahlverringerungsmechanismus (15) zum Übertragen der Drehantriebskraft zu der Spule,
wobei der Motor (14) und der Drehzahlverringerungsmechanismus (15) von dem ersten Rahmen (16) gestützt werden.

6. Sitzgurtvorrichtung, welche wenigstens umfasst:
einen Sitzgurt (6) zum Zurückhalten eines Insassen;
einen Sitzgurtaufroller (3) zum ausziehbaren Einziehen des Sitzgurts;
eine Zunge (8), welche verschiebbar von dem Sitzgurt getragen wird;
ein Gurtschloss (9) für die Zunge (8), welches lösbar mit dieser in Eingriff zu bringen ist,
wobei der Sitzgurtaufroller der Sitzgurtaufroller nach einem der Ansprüche 1-5 ist.

## Revendications

1. Rétracteur de ceinture de sécurité, comprenant au moins:
- une ceinture de sécurité (6);
- un enrouleur (13) pour rétracter et libérer la ceinture de sécurité; et
- un cadre de base (12) pour soutenir en rotation l'enrouleur, dans lequel, le cadre de base (12) comprend: un premier cadre (16) pour soutenir en rotation l'enrouleur (13); un second cadre (17) fixé à un côté de carrosserie ou face de caisse de véhicule automobile; **caractérisé en ce que** le cadre entre les premier et second cadres (16, 17).

2. Rétracteur de ceinture de sécurité selon la revendication 1, dans lequel, le dispositif d'amortissement est formé d'un élément d'amortissement (34, 35, 39).

3. Rétracteur de ceinture de sécurité selon l'une quelconque des revendications 1 ou 2, dans lequel, le premier cadre (16) comprend: une paire de premier et second éléments de support (18, 19) en forme de plaque plate, pour soutenir en rotation l'enrouleur (13); et un élément d'espacement (20-23) pour coupler les premier et second éléments de support (18, 19) de manière à les espacer à une distance prédéterminée, dans lequel l'élément d'espacement (20-23) est un élément pour ajuster les premier et second éléments de support (18, 19) de manière à ce qu'ils soient mutuellement parallèles.

4. Rétracteur de ceinture de sécurité selon la revendication 3, dans lequel, au moins un parmi l'élément d'espacement (20-23) et la paire de premier et second éléments de support (18, 19) comprend une partie d'engagement (20b, 20c, 20e, 20f, 21b, 21d, 22b, 23b), et au moins l'autre parmi l'élément d'espacement et la paire de premier et second éléments de support comprend une partie engagée (19c-19g, 18c, 18d) destinée à être engagée avec la partie d'engagement.

5. Rétracteur de ceinture de sécurité selon l'une quelconque des revendications 1 à 4, comprenant:
- un moteur (14) pour générer une force d'entraînement en rotation pour mettre en rotation l'enrouleur (13); et
- un mécanisme de réduction de vitesse (15) pour transmettre la force d'entraînement en rotation à l'enrouleur,
dans lequel, le moteur (14) et le mécanisme de réduction de vitesse (15) sont soutenus par le premier cadre (16).

6. Appareil de ceinture de sécurité, comprenant au moins:
- une ceinture de sécurité (6) pour retenir un occupant;
- un rétracteur de ceinture de sécurité (3) pour rétracter de manière libérable la ceinture de sécurité,
- une languette (8) soutenue de manière coulissante par la ceinture de sécurité;
- une attache (9) pour que la languette (8) soit engagée de manière détachable avec celle-ci,
dans lequel le rétracteur de ceinture de sécurité est le rétracteur de ceinture de sécurité selon l'une quelconque des revendications 1 à 5.
